(19) Europäisches Patentamt
European Patent Office
Office européen des brevets

(11) **EP 4 276 438 A1**

(12) **EUROPEAN PATENT APPLICATION**

(43) Date of publication:
**15.11.2023 Bulletin 2023/46**

(21) Application number: **22173152.4**

(22) Date of filing: **13.05.2022**

(51) International Patent Classification (IPC):
**G01N 1/08** (2006.01)          **G01N 3/30** (2006.01)
**G01N 3/317** (2006.01)          **G01N 3/58** (2006.01)
**G01N 27/72** (2006.01)

(52) Cooperative Patent Classification (CPC):
**G01N 3/30; G01N 1/08; G01N 3/317; G01N 3/58;
G01N 27/83**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sandvik Mining and Construction Oy
33330 Tampere (FI)**

(72) Inventor: **UUSITALO, Jukka-Pekka
33311 Tampere (FI)**

(74) Representative: **Sandvik
Sandvik Mining and Construction Oy
Patent Department
PL 100
33311 Tampere (FI)**

(54)   **MEASURING ROCK BREAKING DYNAMICS**

(57)    Various example embodiments relate to an arrangement and method for measuring rock breaking dynamics, the arrangement comprising at least one component of a rock breaking system, the component being subjected to stress during rock breaking. The arrangement further comprising, at least one measuring system comprising at least one measuring coil and magnetization means configured to arrange at least part of the component of the rock breaking system into a state of magnetization at least during a measurement period. The at least one measuring system is configured to measure particle velocity on the basis of change in a magnetic flux through the at least one measuring coil in response to movement due to the particle velocity in the component. A measuring system is also disclosed.

FIG. 3A

**Description**

FIELD OF THE INVENTION

The invention relates to measuring rock breaking dynamics. More specifically, the present application relates to an arrangement and a method for measuring rock breaking dynamics.

BACKGROUND OF THE INVENTION

Stresses appearing during rock breaking in a rock breaking system may be measured and employed in controlling the rock breaking. Capabilities of measuring systems to operate in a more optimal way may be however further improved.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

According to an example embodiment, it is created such a magnetic field and at least one coil that the pure amplification of a field or fields do not cause a voltage in the at least one coil but it is caused by the transfer of the fields. In this case, the effect of magnetostriction or mechanical stress is not measured, but the particle velocity. The magnetic circuit may be used to modify the field shape. This may help to obtain a more linear response from the particle velocity $u$ to the electrical voltage $e$.

Example embodiments of the present disclosure may enable measuring rock breaking dynamics without arranging a component of a rock breaking system into a state of persistent magnetization in advance. A direction of a stress wave may also be determined in the measurement. This and other benefits may be achieved by the features of the independent claims. Further advantageous implementation forms are provided in the dependent claims, the description, and the drawings.

According to a first aspect, an arrangement for measuring rock breaking dynamics is disclosed. The arrangement may comprise at least one component of a rock breaking system, the component may be subjected to stress during rock breaking, at least one measuring system comprising at least one measuring coil, and magnetization means configured to arrange at least part of the component of the rock breaking system into a state of magnetization at least during a measurement period, wherein the at least one measuring system may be configured to measure particle velocity on the basis of change in a magnetic flux through the at least one measuring coil in response to movement due to the particle velocity in the component.

According to an example embodiment of the first aspect, the at least one measuring system may be arranged on the component parallel or angular to a central axis of the component; to surround at least partly the component; or into at least one void of the component.

According to an example embodiment of the first aspect, the magnetization means may be arranged between the measuring coils or around the at least one measuring coil; or one measuring coil may be arranged between the magnetization means.

According to an example embodiment of the first aspect, the at least one measuring system may comprise at least one of the following: one measuring coil and two magnetization means, which may be configured to be magnetized in different directions relative to each other; one measuring coil, wherein the measuring coil may be a two-part measuring coil, and one or two magnetization means, wherein a winding direction of the two-part measuring coil may be configured to be changed in the middle of the two-part measuring coil; and/or two measuring coils and one magnetization means.

According to an example embodiment of the first aspect, the at least one measuring system may be configured to measure an angular particle velocity by arranging the at least one measuring system angular to a central axis of the component.

According to an example embodiment of the first aspect, the measurement of the particle velocity may be configured to be depended on a change direction of the magnetic flux, winding direction of the at least one measuring coil, and connection of poles of the at least one measuring coil.

According to an example embodiment of the first aspect, the measuring arrangement may comprise a first measuring coil and a second measuring coil, and wherein the measuring arrangement may be configured to measure the particle velocity when the magnetic flux of the first measuring coil is growing and the magnetic flux is against the winding direction of the first measuring coil causing voltage $e > 0$; and the magnetic flux of the second measuring coil is decreasing and the magnetic flux is in the same direction as the winding direction of the second measuring coil causing voltage e > 0.

According to an example embodiment of the first aspect, a negative pole of the second measuring coil may be connected to a positive pole of the first measuring coil.

According to an example embodiment of the first aspect, the measuring arrangement may comprise a first measuring coil and a second measuring coil, and wherein the measuring arrangement may be configured to measure the particle velocity when the magnetic flux of the first measuring coil is growing and the magnetic flux is against the winding direction of the first measuring coil causing voltage e > 0; and the magnetic flux of the second measuring coil is decreasing and the magnetic flux is against the winding direction of the second measuring coil causing voltage e > 0.

According to an example embodiment of the first aspect, a positive pole of the second measuring coil may be connected to a positive pole of the first measuring coil.

According to an example embodiment of the first aspect, at least two measuring coils may be connected in series.

According to an example embodiment of the first aspect, the arrangement may further be configured to measure temperature of the at least one measuring coil.

According to an example embodiment of the first aspect, the component of the rock breaking system may be at least one of the following: a tool, a drill rod, a drill bit, a component of an impact mechanism such as a frame structure of the impact mechanism, impact device, a drill shank, an attenuating device, an adapter and/or a coupling sleeve.

According to a second aspect, a method for measuring rock breaking dynamics with at least one measuring system comprising at least one measuring coil and magnetization means. The method may comprise subjecting at least one component of a rock breaking system to stress during rock breaking, arranging at least part of the component of the rock breaking system into the state of magnetization at least during a measurement period, and measuring particle velocity on the basis of change in a magnetic flux through the at least one measuring coil in response to a movement due to the particle velocity in the component.

According to a third aspect, a measuring system is disclosed. The arrangement may comprise at least one measuring coil and magnetization means configured to arrange at least part of a component of a rock breaking system into the state of magnetization at least during a measurement period, wherein the measuring system may be configured to measure particle velocity on the basis of change in a magnetic flux through the at least one measuring coil in response to a movement due to the particle velocity in the component.

BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:

Figure 1 shows schematically a side view of a rock drilling rig in which some examples of disclosed embodiments may be applied;

Figure 2 shows schematically an example of a partly cross-sectional side view of a rock breaking system;

Figures 3A to 3C show examples of partly cross-sectional side views of arrangements for measuring particle velocity;

Figures 4A and 4B show another examples of partly cross-sectional side views of arrangements for measuring particle velocity;

Figures 5A to 5C disclose examples of cross-sectional side views showing how particle velocity effects on magnetic flux;

Figure 6A shows an example of a cross-sectional view of a measurement system on a component of the rock breaking system;

Figure 6B shows schematically sign rules of coils of Figure 6A;

Figure 7A shows an example of a cross-sectional view of the measurement system around the component of the rock breaking system;

Figure 7B shows schematically sign rules of coils of Figure 7A;

Figure 7C shows schematically connection of the coils of Figure 7A;

Figure 7D shows schematically winding direction rules of the coils;

Figure 8A shows an example of a cross-sectional view of the measurement system around the component of the rock breaking system;

Figure 8B shows schematically connection of the coils of Figure 8A;

Figure 9 shows an example of the measurement system on the component of the rock breaking system;

Figure 10 shows an example of a cross-sectional view of the measurement system around the component of the rock breaking system;

Figure 11 shows another example of a cross-sectional view of the measurement system around the component of the rock breaking system;

Figure 12 shows yet an example of a cross-sectional view of the measurement system around the component of the rock breaking system;
Figure 13 shows still an example of a cross-sectional view of the measurement system around the component of the rock breaking system; and
Figure 14 shows an example method according to an example embodiment of the invention.

Like references are used to designate like parts in the accompanying drawings.

DETAILED DESCRIPTION OF THE INVENTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

Rock breaking may be performed by drilling holes in a rock by a rock drilling machine. Alternatively, rock may be broken by a breaking hammer. In this context, the term "rock" is to be understood broadly to also cover a boulder, rock material, crust and other relatively hard material. The rock drilling machine and breaking hammer may comprise an impact mechanism, which may provide impact pulses to the tool either directly or through an adapter. The impact pulse may generate a stress wave which propagates in the tool. When the stress wave reaches the end of the tool facing the rock to be drilled, the tool may penetrate into the rock due to the influence of the wave. Some of the energy of the stress wave may reflect back as a reflected wave, which propagates in the opposite direction in the tool, i.e., towards the impact mechanism. Depending on the situation, the reflected wave may comprise only a compression stress wave or a tensile stress wave. However, the reflected wave typically comprises both tension and compression stress components.

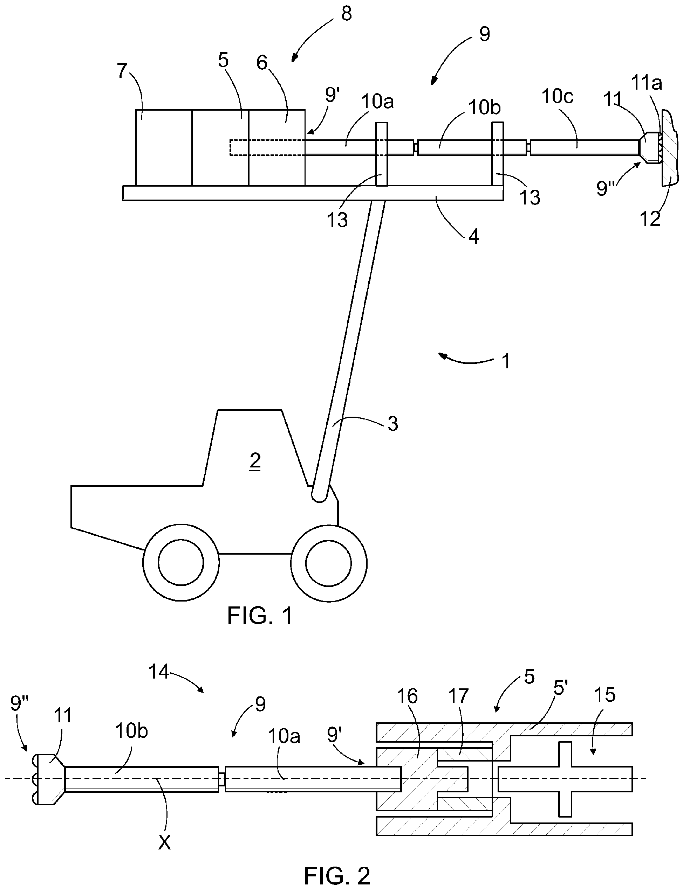

An example of Figure 1 shows schematically a significantly simplified side view of a rock drilling rig 1. The rock drilling rig 1 may comprise a moving carrier 2 and a boom 3 at the end of which there may be a feed beam 4 provided with a rock drilling machine 8 comprising an impact mechanism 5 and a rotating mechanism 6. The rock drilling rig 1 of Figure 1 may further comprise a tool 9, the proximal end of which may be coupled to the rock drilling machine 8 and the distal end of which may be oriented towards the rock 12 to be drilled. The proximal end 9' of the tool 9 is shown in Figure 1 schematically by a broken line. The tool 9 of the rock drilling rig 1 of Figure 1 may comprise drill rods 10a, 10b and 10c and a drill bit 11 at the distal end 9" of the tool 9. The drill bit 11 may be provided with buttons 11a, although other drill bit structures may also be possible. In drilling with sectional drill rods, also known as long hole drilling, a number of drill rods depending on the depth of the hole to be drilled may be attached between the drill bit 11 and the rock drilling machine 8. The tool 9 may also be supported with guide supports 13 attached to the feed beam 4.

The drilling machine may also have a structure other than explained above. For example, in down-the-hole-drilling the impact mechanism is located in the drilling machine at the bottom of the drilling hole next to the drill bit, the drill bit being connected through the drill rods to the rotating mechanism located above the drilling hole.

The impact mechanism 5 may be provided with an impact piston reciprocating under the influence of pressure medium and striking to the tool either directly or through an intermediate piece, such as a drill shank or another kind of adapter, between the tool 9 and the impact piston. Naturally an impact mechanism of a different structure is also possible. The operation of the impact mechanism 5 may thus also be based on use of electromagnetism or hydraulic pressure without any mechanically reciprocating impact piston and in this context the term impact mechanism refers also to impact devices based on such characteristics. The stress wave generated by the impact mechanism 5 is delivered along the drill rods 10a to 10c towards the drill bit 11 at the distal end of the tool 9. When the stress wave meets the drill bit 11, the drill bit 11 and its buttons 11a strike the rock 12 to be drilled, thereby causing to the rock 12 to be drilled a strong stress due to which cracks are formed in the rock 12. Typically, part of the stress wave exerted on or acting on the rock 12 may reflect back to the tool 9 and along the tool 9 back towards the impact mechanism 5.

During drilling the rotating mechanism 6 may transmit continuous rotating force to the tool 9, thus causing the buttons 11a of the drill bit 11 to change their position after an impact and to strike a new spot on the rock 12 at the next impact. The rock drilling rig 1 of Figure 1 may also comprise a feed mechanism 7, which is arranged to the feed beam 4, in relation to which the rock drilling machine 8 may be movably arranged. During drilling the feed mechanism 7 may be arranged to push the rock drilling machine 8 forward on the feed beam 4 and thus to push the drill bit 11 against the rock 12.

Figure 1 shows the rock drilling rig 1 considerably smaller in relation to the structure of the rock drilling machine 8 than what it is in reality. For the sake of clarity, the rock drilling rig 1 of Figure 1 has only one boom 3, feed beam 4, rock drilling machine 8 and feed mechanism 7, although it is obvious that a rock drilling rig may be provided with a plurality of booms 3 having a feed beam 4, a rock drilling machine 8 and a feed mechanism 7. It is also obvious that the rock drilling machine 8 may usually include flushing means to prevent the drill bit 11 from being blocked. For the sake of clarity, no flushing means are shown in Figure 1. The drilling machine 8 may be hydraulically operated, but it may also be pneumatically or electrically operated.

An example of Figure 2 show schematically a partly cross-sectional side view of a rock breaking system 14 which may be used, for example, in the rock drilling rig of Figure 1. The rock breaking system 14 of Figure 2 may comprise an impact mechanism 5 and a tool 9 connected to the impact mechanism 5. The tool 9 in the rock breaking system 14 of Figure 2 may comprise drill rods 10a, 10b and a drill bit 11 at the distal end of the drill rod 10b. The impact mechanism 5 may comprise a frame structure 5' and an impact device 15 arranged to provide impact pulses directed to the tool 9. In an example embodiment of Figure 2, the impact device 15 has a form of an impact piston but the actual implementation of the impact device 15 and the impact mechanism 5 may vary in many ways. The impact mechanism 5 of Figure 2 may also comprise a drill shank 16 to which the proximal end 9' of the tool 9 is fastened, whereby the impact device 15 may be arranged to direct the impact to the drill shank 16 and not directly to the tool 9, the drill shank 16 may thus form an intermediate piece between the impact device 15 and the tool 9. The impact mechanism 5 of Figure 2 may further comprise an attenuating device 17, which is shown very schematically in Figure 2 and which may be positioned between the drill shank 16 and the impact device 15 and supported to the frame structure 5' of the impact mechanism 5. The function of the attenuating device 17 may be to attenuate effects of stresses reflecting back to the tool 9 and the impact mechanism 5 from the rock 12. The attenuating device 17 may also provide positioning of the drill shank 16 at such a point relative to the impact device 15 that the impact provided by the impact device 15 will have an optimal effect on the drill shank 16. The actual implementation of the attenuating device 17 may comprise for example one or more pressure medium operated cylinders.

In an example embodiment of Figure 2, the impact mechanism 5 and the tool 9 coupled to the impact mechanism 5 form the rock breaking system 14, which is subjected to stresses during rock breaking. An implementation of the rock breaking system may, however, vary in many ways. In breaking hammers, for example, the rock breaking system may comprise typically only an impact device and a tool such that the impact provided by the impact device affects straight to the tool 9. Depending on the implementation the rock breaking system may be hydraulically, pneumatically, or electrically operated or the operation of the rock breaking system may be implemented as a combination of hydraulically, pneumatically, and/or electrically operated devices. For the sake of clarity, Figures 1 and 2 do not show any pressure medium lines or electrical lines needed for the operation of the rock breaking system, which lines are as such known to the person skilled in the art.

According to an example embodiment, an arrangement for measuring rock breaking dynamics comprises at least one component of a rock breaking system, wherein the component is subjected to stress during rock breaking. It may also comprise at least one measuring system comprising at least one measuring coil and magnetization means configured to arrange at least part of the component of the rock breaking system into a state of magnetization at least during a measurement period. The at least one measuring system may be configured to measure particle velocity on the basis of change in a magnetic flux through the at least one measuring coil in response to movement due to the particle velocity in the component.

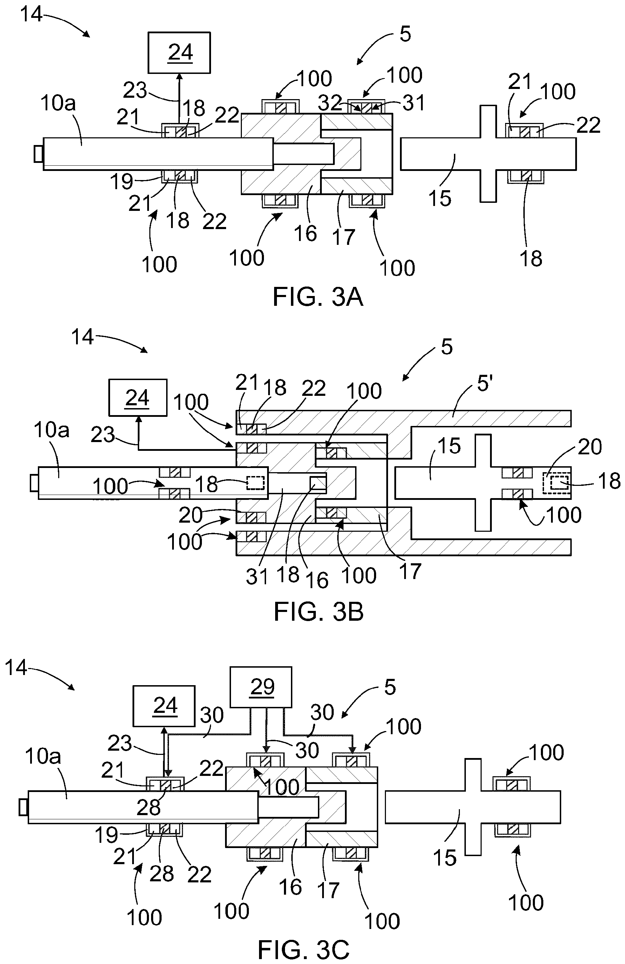

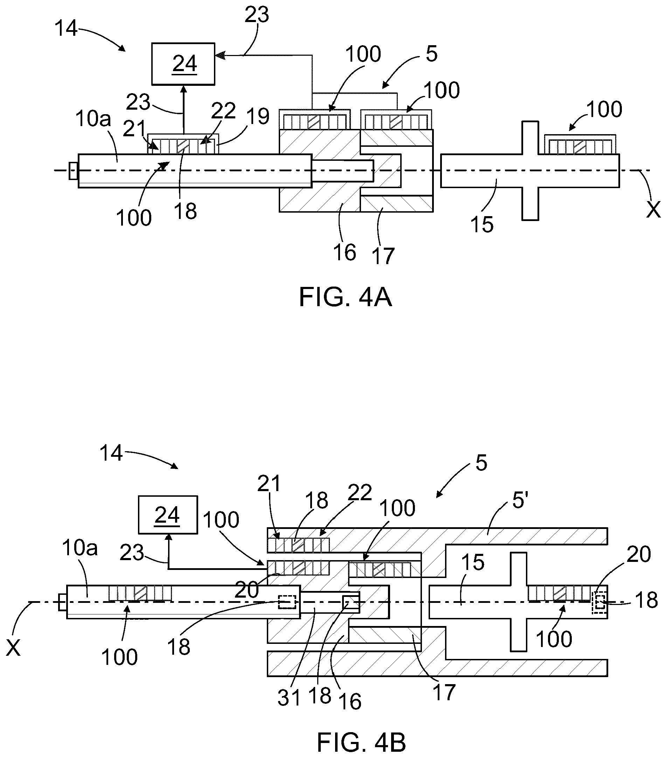

An example of Figure 3A discloses schematically some possible locations where one or more measuring systems 100 may be located in the rock breaking system 14 of Figure 2. For the sake of clarity, the frame structure 5' of the impact mechanism 5 is omitted in Figures 3A to 3C, 4A, and 4B. The at least one measuring system 100 may comprise a first measuring coil 21, a second measuring coil 22, and magnetization means. The magnetization means may be, for example, a permanent magnet 18, a magnetizing coil 28, magnetized steel, magnetized iron, or a combination of one or more permanent magnets 18, magnetized steels, magnetized irons, and/or the magnetizing coils 28. The permanent magnets 18 are elements which are or may be arranged into a state of persistent magnetization. When the permanent magnets 18 are arranged into the state of persistent magnetization, they have a magnetic field, and when at least part of the component of the rock breaking system 14 is subjected to the effect of the magnetic field of at least one permanent magnet 18, at least part of the component of the rock breaking system 14 is further arranged into a state of persistent magnetization. Further, when stress is acting on the component arranged into the state of persistent magnetization during rock breaking, or in other words, when stress affects the component of the rock breaking system arranged into the state of persistent magnetization, the stress causes a change in a magnetic property of the component.

The state of persistent magnetization may be a state of magnetization that remains for a relatively long period of time as in a permanent magnet, a state of magnetization that is maintained by intermittent application of an external magnetic source, a state of magnetization remaining internally in the component material resulting from exposure to an external magnetic field, or a state of persistent magnetization that need not be maintained with an external magnetic source during a measurement period. It is possible that the state of persistent magnetization is provided by a single intermittent application of a magnetic source either by active means, some examples of which are provided later, or by non-active means, such as a permanent magnet.

The change in the magnetic property of the component may be a change in a magnetic field of the component, a change in a total magnetic flux through the component, a change in a permeability or magnetic inductivity of the component, or a change in a state or intensity of magnetization of the component, for example. The change in the magnetic property of the component may be a consequence of a change in the state of the material of the component being subjected to stress.

According to an example embodiment, the at least one component of the rock breaking system 14 comprises at least one measurement system 100, wherein the at least one component may, for example, be the impact mechanism 5, the frame structure 5' of the impact mechanism 5, the impact device 15, the drill shank 16, the attenuating device 17, the tool 9 of the rock breaking system 14 such as the drill rods 10a, 10b, 10c and/or the drill bit 11. The at least one component may also be an adapter or a coupling sleeve in the impact mechanism, for example. The components of the rock breaking system 14 are thus components which may generate, convey or damp the stresses or the stress waves appearing during rock breaking.

In an example of Figure 3A measurement systems 100 are fastened in a supporting structure 19 and have a circular form so that the measurement system 100 may be arranged to surround the component from which the particle velocity is measured. In Figure 3A the measurement systems 100 are arranged to surround the rod 10a of the tool 9, the drill shank 16, the attenuating device 17 and the impact device 15. Even tough, there are measurement systems 100 around different components, they only show where the particle velocity may be measured. There may be only one measurement system 100 in the rock breaking system 14 located for example, around the rod 10a of the tool 9, the drill shank 16, the attenuating device 17, or the impact device 15. However, the particle velocity may be measured also from many components of the rock breaking system 14 at the same time.

An example of Figure 3B discloses schematically some further possible locations where one or more measurement systems 100 may be located in the rock breaking system 14 of Figure 2. In Figure 3B the measurement systems 100 may also have the circular shape but the supporting structures 19 disclosed in Figure 3A have been left out. In the example embodiment of Figure 3B there are voids 20 formed in the frame structure 5' of the impact mechanism 5, the drill shank 16, the attenuating device 17 and the impact device 15, whereby the measurement systems 100 may be arranged inside said components by arranging the measurement systems 100 into the voids 20 in the components. Also, the interiors of the drill rod 10a and the impact device 15, for example, form a kind of void wherein the magnetizations means may be arranged. In the drill shank 16 the measurement system 100 may be located in a flushing channel 31 of the drill shank 16, for example, the flushing channel forming a kind of void in the drill shank 16.

Figures 3A and 3B show schematically some possible locations where the measurement systems 100 may be arranged in the rock breaking system 14. The arrangement may, however, comprise only one measurement system 100 to measure the particle velocity. Alternatively, the arrangement may comprise two or more measurement system 100 to measure the particle velocity of the one or more rock breaking system components. Therefore, in the arrangement there may be several rock breaking system components each having a relating measurement system 100 or one or more rock breaking system components having several relating measurement systems 100. If in the arrangement there are several measurement systems 100 relating to one rock breaking system component, the measurement systems 100 may also be arranged to be successive in relation to each other in the circumferential direction of the specific rock breaking system component. In this case the measurement system 100 may have a form of a rectangle, for example. The measurement systems 100 may also be connected in series to increase the signal. According to an example embodiment, at least two measurement systems 100 of Figure 3B are placed at the same height but on the different sides of the components and connected in series.

In the examples of Figures 3A and 3B the measurement systems 100 are arranged permanently in the vicinity of the rock breaking system components, the measurement systems 100 may thus be arranged to continuously provide measurement data relating to the particle velocity u of the components.

Figures 3A and 3B disclose schematically also means for measuring the particle velocity of the rock breaking system 14 on the basis of the change in a magnetic flux through the at least one measuring coil 21, 21a, 22 in response to movement due to the particle velocity u in the component originating from the stress, such as the stress wave, affecting the component of the rock breaking system 14 during the operation of the rock breaking system 14.

In the examples of Figures 3A and 3B the measurement systems 100 for measuring the particle velocity u on the basis of the change in a magnetic flux in response to movement due to the particle velocity u comprises the at least one measurement coil 21, 21a, 22, and permanent magnet 18, which in the embodiment of Figure 3A are arranged to surround the components and in the embodiment of Figure 3B are arranged into the voids 20 in the components.

The components may be arranged into the state of magnetization by the permanent magnet 18. There may be more than one measurement systems 100 around either the same or different rock breaking system components for measuring the particle velocity u. Due to the change in a magnetic flux through the at least one measuring coil 21, 21a, 22 in response to movement due to the particle velocity u in the component the particle velocity u may be measured. The measured particle velocity u, in turn, may indicate the stresses affecting the specific rock breaking system component.

The measurement information provided by the measurement system 10 may be transferred, either through a wired connection or a wireless connection, schematically indicated by arrow 23, to a data processing unit 24. The data processing unit 24 may comprise software- and/or hardware-based means for processing or modifying the measurement information provided by the measurement system 10 to reach a meaningful representation of the measurement information provided by the measurement system 10 such that the measurement information may be analysed and/or used for controlling the operation of the rock breaking system 14 or the whole rock drilling rig 1 or the breaking hammer.

When at least one measurement system 100 is used for measuring the particle velocity u, calibration may be easy to do because the particle velocity is closer to linear with respect to the measured electrical voltage.

When considering the operation of the arrangement for measuring rock breaking dynamics, instruments relating to the measurement operation, like permanent magnets 18, may be preferably manufactured of electrically non-conductive material. Possible coils, however, may be naturally made of electrically conductive material.

An example of Figure 3C discloses several measuring systems 100 comprising magnetizing coils 28 used as magnetizing means, which may be used to arrange at least part of the component of the rock breaking system 14 into the state of magnetization. The state of magnetization may be permanent or temporary, for example lasting only a moment of measuring. One or more measuring systems 100 may be arranged to surround the drill rod 10a, the drill shank 16, the attenuating device 17 and the impact device 15. One or more measuring systems 100 may also be arranged to surround the frame structure of the impact device 5. In Figure 3C the drill rod 10a, the drill shank 16, the attenuating device 17 and the impact device 15 are surrounded by only one measuring system 100 but they may also be surrounded by two or more measuring systems 100. The measuring systems 100 may also be inserted in voids provided in the rock breaking system components in a similar way as the permanent magnets in the example of Figure 3B. The particle velocity u of the at least one component of the rock breaking system 14 may be measured for example as explained in the examples of Figures 3A and 3B.

The example embodiment in Figure 3C comprises also a power source 29 configured to provide the necessary electric power for the magnetization coils 28 through the connections presented by arrows 30. The power source 29 may be configured to provide an electromagnetic pulse in order to arrange at least part of the component of the rock breaking system 14 into the state of magnetization. The length, shape and amplitude of the electromagnetic pulse may be fixed or variable. The component of the rock breaking system 14 may be arranged into the state of magnetization at intervals, for example at regular intervals, on the basis of an operating state of the rock breaking system 14, on the basis of operation of the measuring member or on the basis of a change in the magnetic property of the component of the rock breaking system 14. At least part of the component of the rock breaking system 14 may be arranged into the state of magnetization also prior to use of the component in the rock breaking system 14.

When the component of the rock breaking system 14 is arranged into the state of magnetization at intervals, there may be certain time periods between which the magnetization operations may be provided. The time periods may be related to absolute time, rock breaking time, work shift durations and so on. The interval may also be defined on the basis of rock breaking operations, such as a drilled distance, a number of impacts subjected to the tool 9, an amount of impact energy or energy in general travelled through the tool 9 and so on. An interval may also be used for making magnetization operations occur at least within the interval. That is, if magnetization operations have not taken place during a defined interval, magnetization operations may be executed.

When the component of the rock breaking system is arranged into the state of persistent magnetization prior to use of the component in the rock breaking system, at least part of the component may be arranged into the state of persistent magnetization for example after the manufacturing of the component, before assembling the component to the rock breaking system either at the factory or use site of the rock breaking system, or after assembling the component to the rock breaking system but before the actual operation of the rock breaking system. At least part of the component of the rock breaking system may thus be arranged into the state of persistent magnetization with a magnetic field external to the rock breaking system.

The operation of the magnetization may be controlled for example with the data processing unit 24.

In the example of Figure 3C and the related specification above, the component of the rock breaking system is arranged into the state of persistent magnetization by using only the magnetization coil 28 as the magnetization means. It may however be possible that a permanent magnet is arranged in combination with the magnetization coil 28. It may also be possible that instead of using the magnetization coil 28 only a permanent magnet is used for arranging the specific component of the rock breaking system into the state of magnetization by arranging the permanent magnet in the vicinity of the specific rock breaking system component only for a specific time period. Thus, also only the permanent magnet may be used to intermittently provide at least part of the component of the rock breaking system into the state of persistent magnetization.

Figures 4A and 4B disclose schematically also means for measuring the particle velocity u of the rock breaking system 14 on the basis of the change in a magnetic flux through the first and second measuring coil 21,22 in response to movement due to the particle velocity u in the component originating from the stress, such as the stress wave, affecting the component of the rock breaking system 14 during the operation of the rock breaking system 14.

In the examples of Figures 4A and 4B the measurement systems 100 comprises a first measurement coil 21, a second measurement coil 22, and permanent magnet 18. The examples of Figures 4A and 4B show similar arrangements as in Figures 3A and 3B, except that the measuring systems are placed on the components instead of surrounding the components. According to an example of Figure 4A, the measurement systems 100 is arranged on the component parallel or angular to a central axis X of the component. According to an example of Figure 4B, the measurement systems 100 is arranged into at least one void 20 of the component. The measuring system may be located inside or outside of the components making it possible to measure particle velocity u from different components and from different positions of the components.

According to an example embodiment, the magnetization means 18, 28 is arranged between the first measuring coil 21 and the second measuring coil 22.

According to an example of Figure 4A and 4B, the first measuring coil 21, the second measuring coil 22, and the magnetization means 18, 28 are arranged parallel to the central axis X on top of each other, or the first measuring coil 21, the second measuring coil 22, and the magnetization means 18, 28 are arranged angular to the central axis X adjacent to each other. The angle is for example 90 °.

According to an example of Figure 4A and 4B, the first measuring coil 21, the second measuring coil 22, and the magnetization means 18, 28 are arranged parallel to the central axis X on top of each other, wherein the magnetization means 18, 28 is arranged below the first measuring coil 21 and above the second measuring coil 22, wherein the first measuring coil 21 is directed towards a rock drilling machine 8 and the second measuring coil 22 is directed towards to a drill bit 11.

According to an example embodiment the measurement system 100 may comprise support structure 19. The first measuring coil 21, the second measuring coil 22, and the magnetization means 18, 28, 38, 39 may be inserted inside the supporting structure 19. The support structure may comprise a jacket surrounding the measurement system 100 and end plates so that the supporting structure 19 may be a closed structure enclosing measurement system 100 inside the supporting structure 19. At least one of the end plates may be detachable for inserting the measurement system 100 inside the supporting structure 19.

According to an example embodiment of Figures 3A to 3C, the ringshaped measurement system 100 is arranged to entirely surround the rock breaking system component, for example the drill rod 10a. The measurement system 100 surrounding either partly or entirely the rock breaking system component under interest may also have another curvilinear shape. The shape or form of the measurement system 100 surrounding at least partly the rock breaking system component under interest may also have other kind of at least partly circumferential shape than the curvilinear or annular form. The ends measurement system 100 (not shown) may be arranged to run through the end plates.

According to an example embodiment, the at least one measuring system 100 is openable. It may at least partly surround the component of the rock breaking system 14. The measuring system 100 may have two portions, each comprising the supporting structure 19, the at least one measuring coil 21, 21a, 22, and the magnetization means 18, 28, 38, 39 having a shape of semiarch. The two portions may be combined, for example by using a joint hinge, with each other to form one measuring system 100 having a round form by placing the portions against each other. The at least one measuring coil 21, 21a, 22, and the magnetization means 18, 28, 38, 39 may also be connected together. The measuring means 100 may be assembled around the rock breaking system component not only from the end of the component but also from the side of the component. Two permanent magnets 18 may form, in practice, a single permanent magnet 18 arranged around the rock breaking system component. Also, permanent magnets 18 having a shape or a form differing from the circumferential structure may be arranged in some way openable. Also, the at least one measuring coil 21, 21a, 22 may be arranged openable in a similar way as permanent magnets 18. When the structure of the measuring means 100 is openable, it may be openable in a way to enable placement in the vicinity of the rock breaking system or to at least partly, surround the rock breaking system. It may also be openable for maintenance and service purposes of the measuring means 100, rock breaking system or the rock breaking device, such as a drill rig.

In the embodiments of Figures 3A to 4B the permanent magnet 18 or permanent magnets 18 may be manufactured of electrically conductive material without harmful deteriorating effect to the measurement of rock breaking dynamics if the jacket is made of electrically non-conductive material.

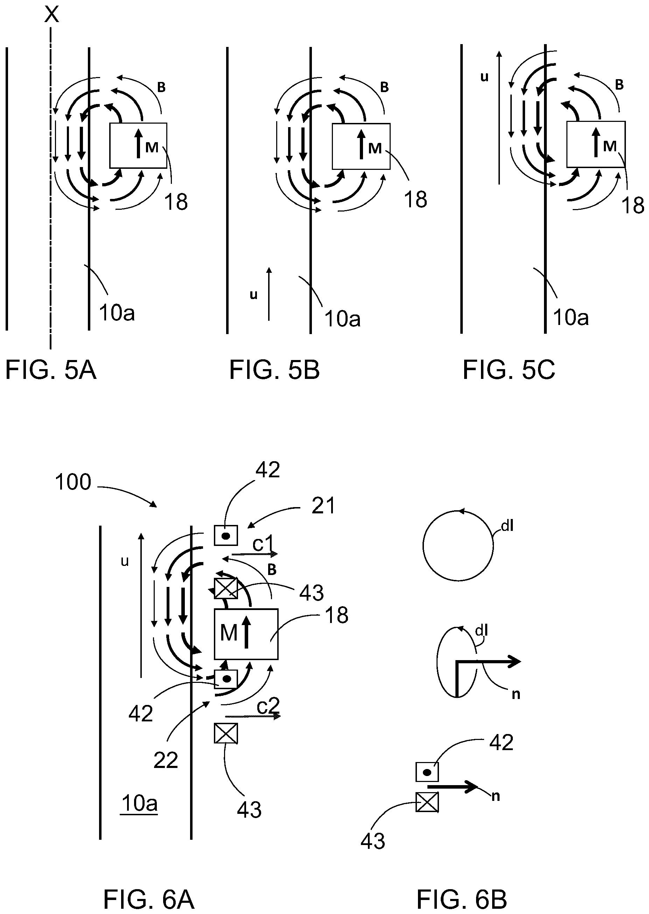

Examples of Figures 5A to 5C disclose cross-sectional views showing how particle velocity u effects on magnetic flux $\Phi$. The example of Figure 5A shows a drill rod 10a with a permanent magnet 18 attached to the side of the drill rod 10a. Also other magnetization means may be used, for example, a magnetized steel, magnetized iron, or a magnetization coil 28. The magnetization means is a cube or prism, for example. The magnetization means may create magnetization M to the drill rod 10a. The magnetization M may create a magnetic flux density B and a total magnetic flux $\Phi$. The magnetic flux $\Phi$ through a surface is a surface integral of a normal component of the magnetic flux density B over that surface. As can be seen from the Figure 5A, the magnetic field is stronger inside the loop and weakens outwards. In the example of Figure 5B, the drill rod 10a has been subjected to stress pulse causing a stress wave. The stress may be compression stress. The example of Figure 5C shows how the particle velocity u causes a shift in the magnetization M in the drill rod 10a.

An example of Figure 6A shows a cross-sectional view of a measurement system 100 located on a side of a drill rod 10a. The measurement system 100 may be used, for example, in the rock breaking systems 14 of 4A and 4B.

The measuring system 100 may comprise a first measuring coil 21, a second measuring coil 22, and magnetization means, for example a permanent magnet 18, configured to arrange at least part of the drill rod 10a into a state of magnetization at least during a measurement period. According to an example embodiment, the magnetization means is arranged between the first measuring coil 21 and the second measuring coil 22. According to an example embodiment, the measuring system 100 is arranged on the drill rod 10a parallel to a central axis X of the drill rod 10a. The first measuring coil 21, the second measuring coil 22, and the magnetization means may be arranged on top of each other. The magnetization means may have a top side and bottom side. According to an example embodiment, the magnetization means is arranged below the first measuring coil 21 and above the second measuring coil 22. The first measuring coil 21 may be located above the top side of the magnetization means directed towards the rock drilling machine 8 and the second measuring coil 22 may be located below the bottom side of the magnetization means directed towards the drill bit 11.

An example of Figure 6B shows schematically sign rules of the first measuring coil 21 and the second measuring coil 22 of Figure 6A. There is a circle in an edge of a plane. The circle shows differential path length dl and its direction having surface normal vector n. A dot 42 shows how the differential path length dl comes outward of the plane and a cross 43 shows how the differential path length dl goes inward of the plane.

According to an example embodiment, in the initial situation, wherein there is no stress wave in the component, the magnetic flux ($\Phi 1$, $\Phi 2$) is constant through the first and second measuring coil 21,22, thus there is no voltage v in the first and second measuring coil 21,22. However, the particle velocity u may cause change in a magnetic flux $\Phi 1$, $\Phi 2$ through the first and second measuring coil 21,22 generating voltage e. The voltage e may be generated so that the current I that it produces may tend to resist the change in the magnetic flux $\Phi 1$, $\Phi 2$. This means, the higher the particle velocity u, the greater the current I. According to Faraday's law, voltage e (an electromotive force) is caused by a change in the magnetic flux $\Phi 1$, $\Phi 2$.

According to an example embodiment, the voltage e is generated in both the first and the second measuring coils 21,22. In one of the measuring coils 21,22 the magnetic flux $\Phi 1$, $\Phi 2$ may increase and in the one of the measuring coils 21,22 the magnetic flux $\Phi 1$, $\Phi 2$ may decrease with time. The amount of the total voltage e obtained when the first and second measuring coil 21,22 are connected or summed may depend on the winding directions c1,c2 of the first and second measuring coil 21,22 and connection of poles 44,45 of the first and second measuring coil.

Further, also magnetostriction may affect to the voltage e. An inverse magnetostriction (Villar effect) may have an effect that a stress may change a remanence magnetization and permeability, thus the magnetic flux $\Phi 1$, $\Phi 2$ and the magnetic flux density B in general.

An example of Figure 6A, shows a compression stress and the voltage e is generated in both the first and the second measuring coils 21,22. In the first measuring coil 21 the magnetic flux $\Phi 1$ may increase and in the second measuring coil 22 the magnetic flux $\Phi 2$ may decrease with time. The amount of the total voltage e obtained when the first and second measuring coils 21,22 are connected may depend on the winding directions c1,c2 of the first and second measuring coil 21,22.

According to an example embodiment, the magnetic flux $\Phi 1$ of the first measuring coil 21 is growing and the magnetic flux $\Phi 1$ is against the winding direction c1 of the first measuring coil 21 causing voltage e > 0, and the magnetic flux $\Phi 2$ of the second measuring coil 22 is decreasing and the magnetic flux $\Phi 2$ is in the same direction as the winding direction c2 of the second measuring coil 22 causing voltage e > 0. As a result a sum is two times effect of the particle velocity u. The first and the second measuring coil 21, 22 may cause the same voltage e. When the first and second coil 21, 22 are connected in series, the result may be 2 x e, which may be equivalent to a particle velocity u. When the first and the second coil 21, 22 are wound and connected like this, the effect of the magnetostriction on the first and second coil 21, 22 is at least close to zero.

According to an example embodiment a movement due to the particle velocity u on the component is configured to cause voltage e, wherein

$$e = (+/-)( - N1 \cdot d/dt \cdot \int A21(B \cdot n)da)(+/-)( - N2 \cdot d/dt \cdot \int A22(B \cdot n)da),$$

wherein

d/dt is the time derivate;
N1 is a number of turns of the first measuring coil 21;
N2 is a number of turns of the second measuring coil 22;
$\int A21(B \cdot n)da$ is change in magnetic flux $\Phi 1$ through the first measuring coil (21);
$\int A22(B \cdot n)da$ is change in magnetic flux $\Phi 1$ through the second measuring coil (22);
B is a magnetic flux density;

n is a normal vector of the surface, and it depends on the winding direction;
A21 is a coil cross-sectional area of the first measuring coil 21;
A22 is a coil cross-sectional area of the second measuring coil 22; and
+/- is configured to be determined according to coupling of poles (44,45) of the first or second measuring coil 21,22.

According to the example embodiment, measurement of the particle velocity u is configured to depend on a change direction of the magnetic flux Φ1, Φ2, winding directions c1,c2 of the first and second measuring coil 21,22, and connection of poles of the first and second measuring coil 21,22.

According to the example embodiment, the particle velocity u = $\sigma/(\rho \cdot c)$, wherein

σ is mechanical stress;
p is density of a component material; and
c is speed of sound in a medium.

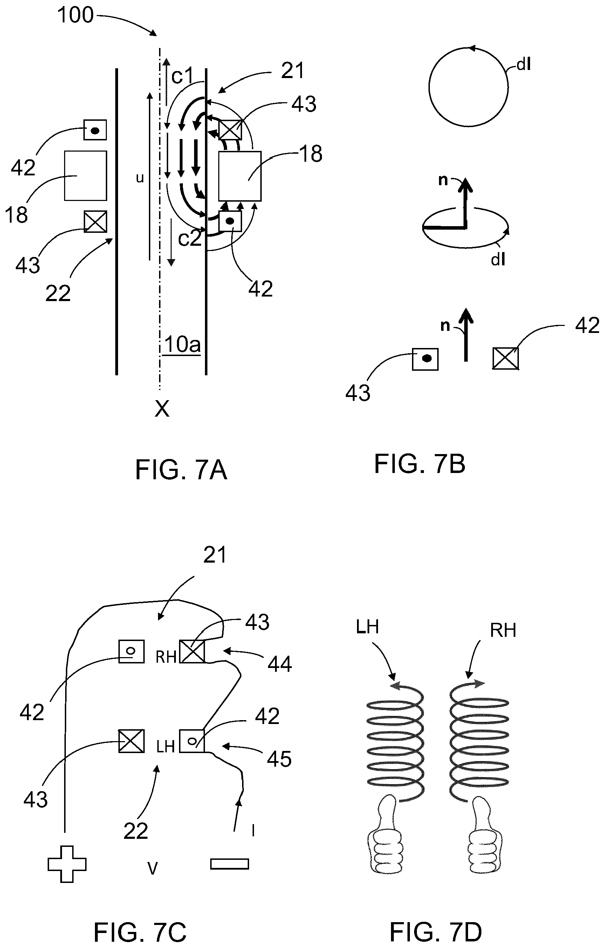

An example of Figure 7A shows a cross sectional view of the measurement system 100 around the component of the rock breaking system 14 and Figure 7B shows schematically sign rules of coils of Figure 7A. The measurement system 100 may be used, for example, in the rock breaking systems 14 of 3A to 3C. According to the example embodiment, the measuring system 100 is arranged at least partly to surround the component, for example, the drill rod 10a. The first measuring coil 21, the second measuring coil 22, and the magnetization means may be arranged parallel to the central axis X on top of each other, wherein the magnetization means may be arranged between the first measuring coil 21 and the second measuring coil 22. The magnetization means may be a permanent magnet 18 or a magnetizing coil 28.

According to an example embodiment, the magnetic flux Φ1 of the first measuring coil 21 is growing and the magnetic flux Φ1 is against the winding direction c1 of the first measuring coil 21 causing voltage e > 0, and the magnetic flux Φ2 of the second measuring coil 22 is decreasing and the magnetic flux Φ2 is in the same direction as the winding direction c2 of the second measuring coil 22 causing voltage e > 0. As a result a sum is two times effect of the particle velocity u.

An example of Figure 7C shows schematically connection of the coils of Figure 7A. According to an example embodiment, the measurement of the particle velocity u is configured to depend on a change direction of the magnetic flux Φ1, Φ2, winding directions c1 ,c2 of the first and second measuring coil 21,22, and connection of poles 44,45 of the first and second measuring coil 21,22. According to an example embodiment, a negative pole 45 of the second measuring coil 22 is connected to a positive pole 44 of the first measuring coil 21. Thus, different connections of poles 44,45 and winding directions c1,c2 may be used in the measurement system 100 to measure the particle velocity u in optimal way.

An example of Figure 7D shows schematically winding direction rules of the first measuring coil 21 and the second measuring coil 22. Helices can be either right-handed or left-handed. With the line of sight along a helix's axis, if a clockwise screwing motion moves the helix away from the observer, then it is called a right-handed helix and if it moves it towards the observer, then it is a left-handed helix.

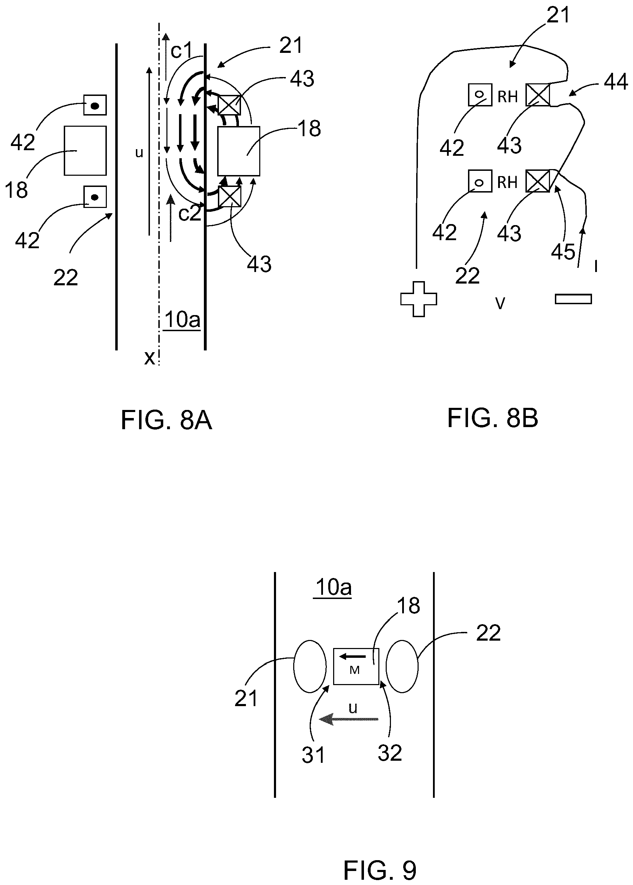

An example of Figure 8A shows a side view of the measurement system 100 around the component of the rock breaking system 14. The measurement system 100 may be used, for example, in the rock breaking systems 14 of 3A to 3C. According to the example embodiment, the measuring system 100 is arranged at least partly to surround the drill rod 10a. The first measuring coil 21, the second measuring coil 22, and the magnetization means may be arranged parallel to the central axis X on top of each other, wherein the magnetization means may be arranged between the first measuring coil 21 and the second measuring coil 22. The magnetization means may be a permanent magnet 18, a magnetizing coil 28, magnetized iron 38, or a magnetized steel 39.

According to an example embodiment, the magnetic flux Φ1 of the first measuring coil 21 is growing and the magnetic flux Φ1 is against the winding direction c1 of the first measuring coil 21 causing voltage e > 0, and the magnetic flux Φ2 of the second measuring coil 22 is decreasing and the magnetic flux Φ2 is in against the winding direction c2 of the second measuring coil 22 causing voltage e > 0. As a result a sum is two times effect of the particle velocity u.

An example of Figure 8B shows schematically connection of the coils of Figure 8A. According to an example embodiment, a positive pole 45 of the second measuring coil 22 is connected to a positive pole 44 of the first measuring coil 21.

An example of Figure 9 shows the measurement system 100 on the component of the rock breaking system 14. The measuring system 100 may be configured to measure an angular particle velocity u by arranging the at least one measuring system 100 angular to a central axis X of the component, for example the drill rod 10a. An angle is about 90°, for example. According to an example embodiment, the first measuring coil 21, the second measuring coil 22, and the magnetization means may be arranged angular to the central axis X adjacent to each other, wherein the magnetization means, for example, the permanent magnet 18, is arranged between the first measuring coil 21, the second measuring coil 22. According to an example embodiment, the first measuring coil 21, the second measuring coil 22, and the magnetization means are arranged angular to the central axis X adjacent to each other, wherein the first measuring coil 21 is arranged on a first side 31 of the magnetization means, and the second measuring coil 22 is arranged on a second side 32 of the magnetization means. A top side of the magnetization means is facing to the rock drilling machine 8 and the bottom side of the magnetization means is facing to the drill bit 11. The first side 31 of the magnetization means is on the left of the magnetization means and the second side 32 of the magnetization means is on the right of the magnetization means.

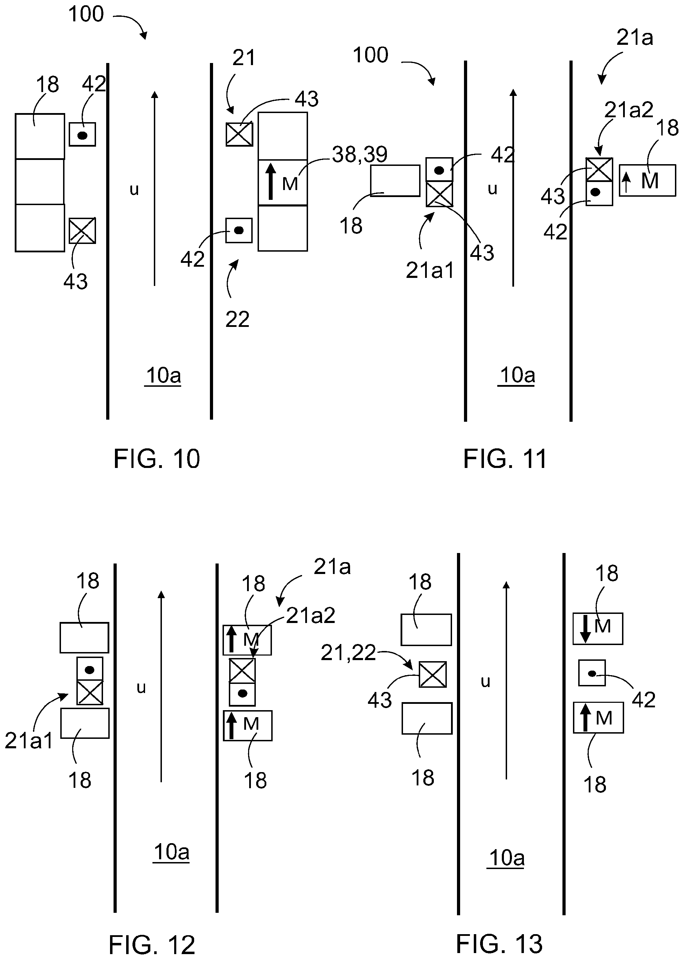

An example of Figure 10 shows a cross sectional view of the measurement system 100 around the component of the rock breaking system 14. The measurement system 100 may be used, for example, in the rock breaking systems 14 of 3A to 3C. According to the example embodiment, the at least one measuring system 100 is arranged at least partly to surround the component, for example, the drill rod 10a. The measuring system 100 may comprise two measuring coils 21, 22 and the magnetization means 18, 28, 38, 39. The first measuring coil 21, the second measuring coil 22, and the magnetization means may be arranged parallel to the central axis X. The magnetization means may be at least one of the following: a permanent magnet 18, a magnetizing coil 28, a magnetized iron 38, and/or a magnetized steel 39. The first and second measuring coil 21, 22 may be arranged on top of each other. The first and second measuring coil 21, 22 may be arranged to at least partly surround the component 5, 5', 9, 10a, 10b, 10c, 15, 16, 17 and the magnetization means 18, 28, 38, 39 may be arranged to at least partly surround the first and second measuring coil 21, 22. Thus, the magnetization means 18, 28, 38, 39 may be arranged on the first and second measuring coil 21, 22. According to an example embodiment the magnetizing means is a magnetized iron 38 or a magnetized steel 39.

According to an example embodiment, the magnetic flux $\Phi 1$ of the first measuring coil 21 is growing and the magnetic flux $\Phi 1$ is against the winding direction c1 of the first measuring coil 21 causing voltage e > 0, and the magnetic flux $\Phi 2$ of the second measuring coil 22 is decreasing and the magnetic flux $\Phi 2$ is in the same direction as the winding direction c2 of the second measuring coil 22 causing voltage e > 0. As a result a sum is two times effect of the particle velocity u.

Figures 10 to 13 discloses schematically some possible locations where one or more measuring systems 100 may be located in the rock breaking system 14 of Figure 2. The one or more measuring systems 100 may also be located according to Figures 4A and 4B but this, however, may require changes to the structure of the measuring systems 100.

An example of Figure 11 shows a cross sectional view of the measurement system 100 around the component of the rock breaking system 14. The measurement system 100 may be used, for example, in the rock breaking systems 14 of 3A to 3C. According to the example embodiment, the at least one measuring system 100 is arranged at least partly to surround the component, for example, the drill rod 10a. The measuring system 100 may comprise one measuring coils 21a and the magnetization means 18. The measuring coil may be built from two or more coils thus, many coils may form one measuring coil. The coils may be connected in series. According to an example embodiment, the measuring coil is a two-part measuring coil 21a, wherein a winding direction of the two-part measuring coil 21a is configured to be changed in the middle of the two-part measuring coil 21a. The measuring coil 21a may comprise at least two parts 21a1, 21a2. One measuring coil 21a and one magnetization means 18 may be arranged parallel to the central axis X. The measuring coil 21a may be arranged to at least partly surround the component 5, 5', 9, 10a, 10b, 10c, 15, 16, 17 and the magnetization means 18, 28, 38, 39 may be arranged to at least partly surround the measuring coil 21a. Thus, the magnetization means 18, 28, 38, 39 may be arranged on the two-part measuring coil 21a.

An example of Figure 12 shows a cross sectional view of the measurement system 100 around the component of the rock breaking system 14. The measurement system 100 may be used, for example, in the rock breaking systems 14 of 3A to 3C. According to the example embodiment, the at least one measuring system 100 is arranged at least partly to surround the component, for example, the drill rod 10a. The measuring system 100 may comprise one measuring coil 21a and two magnetization means 18. The measuring coil may be built from two or more coils, which may be connected in series thus, many coils may form one measuring coil. According to an example embodiment, the measuring coil comprises at least one two-part measuring coil 21a, wherein a winding direction of the two-part measuring coil 21a is configured to be changed in the middle of the two-part measuring coil 21a. The measuring coil 21a may comprise at least two parts 21a1, 21a2. One measuring coil 21a and two magnetization means 18 may be arranged parallel to the central axis X. The two magnetization means 18 may be configured to be magnetized in the same direction relative to each other. The first of the magnetization means 18 may be arranged above the measuring coil 21a and the second of the magnetization means 18 may be arranged below the measuring coil 21a. The measuring coil 21a and the two magnetization means 18 may be arranged to at least partly surround the component 5, 5', 9, 10a, 10b, 10c, 15, 16, 17.

An example of Figure 13 shows a cross sectional view of the measurement system 100 around the component of the rock breaking system 14. The measurement system 100 may be used, for example, in the rock breaking systems 14 of 3A to 3C. According to the example embodiment, the at least one measuring system 100 is arranged at least partly to surround the component, for example, the drill rod 10a. The measuring system 100 may comprise one measuring coil 21, 22 and two magnetization means 18. One measuring coil 21, 22 and two magnetization means 18 may be arranged parallel to the central axis X. The two magnetization means 18 may be configured to be magnetized in the different directions relative to each other. This means that the two magnetization means 18 may be configured to be magnetized in the opposite directions relative to each other. The first of the magnetization means 18 may be arranged above the measuring coil 21, 22 and the second of the magnetization means 18 may be arranged below the measuring coil 21a. The magnetization directions of two magnetization means 18 may be towards the measuring coil 21, 22. The measuring coil 21a and the two magnetization means 18 may be arranged to at least partly surround the component 5, 5', 9, 10a, 10b, 10c, 15, 16, 17. According to an example embodiment, the at least one measuring coil 21, 21a, 22 are connected in series.

According to an example embodiment, the arrangement is further configured to measure temperature of the at least one measuring coil 21, 21a, 22. According to an example embodiment, temperature of the at least one measuring coil 21, 21a, 22 is configured to be measured by resistance of the at least one measuring coil 21, 21a, 22, and/or with at least one temperature sensor. Temperature measurement may increase accuracy because properties of the at least one measuring coil 21, 21a, 22 may change as a function of temperature.

According to an example embodiment, the at least one measuring system 100 comprising at least one of the following: one measuring coil 21,22 and two magnetization means 18, 28, 38, 39 which are configured to be magnetized in different directions relative to each other; one measuring coil 21a, wherein the measuring coil 21a is a two-part measuring coil 21a, and one or two magnetization means 18, 28, 38, 39 wherein a winding direction d1,d2 of the two-part measuring coil 21a is configured to be changed in the middle of the two-part measuring coil 21a; and/or two measuring coils 21,22 and one magnetization means 18, 28, 38, 39.

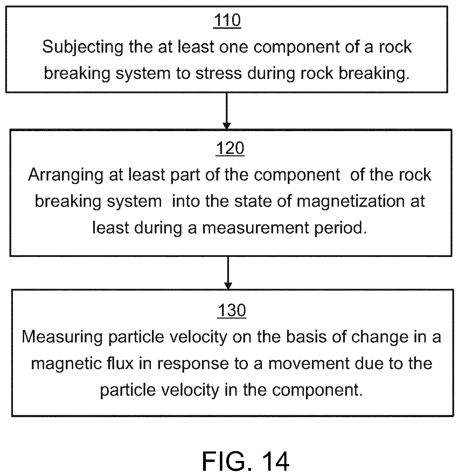

Figure 14 illustrates an example of a method for measuring rock breaking dynamics with at least one measuring system 100 comprising at least one measuring coil 21, 21a, 22, and magnetization means.

At operation 110, the method may comprise subjecting at least one component of a rock breaking system 14 to stress during rock breaking.

At operation 120, the method may comprise arranging at least part of the component of the rock breaking system 14 into the state of magnetization at least during a measurement period.

At operation 130, the method may comprise measuring particle velocity u on the basis of change in a magnetic flux $\Phi 1$, $\Phi 2$ through the at least one measuring coil 21, 22a, 22 in response to a movement due to the particle velocity u in the component.

Further features of the method directly result from functionalities of, for example, the at least one measuring system 100. Different variations of the method may be also applied, as described in connection with the various example embodiments.

The arrangement for measuring rock breaking dynamics may be configured to perform or cause performance of any aspect of the method(s) described herein.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first', 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. An arrangement for measuring rock breaking dynamics, the arrangement comprising

   at least one component (5, 5', 9, 10a, 10b, 10c, 15, 16, 17) of a rock breaking system (14), the component (5, 5', 9, 10a, 10b, 10c, 15, 16, 17) being subjected to stress during rock breaking,
   at least one measuring system (100) comprising at least one measuring coil (21,21a,22) and magnetization means (18, 28, 38, 39) configured to arrange at least part of the component (5, 5', 9, 10a, 10b, 10c, 15, 16, 17) of the rock breaking system (14) into a state of magnetization at least during a measurement period, wherein the at least one measuring system (100) is configured to measure particle velocity (u) on the basis of change in a magnetic flux ($\Phi$1, $\Phi$2) through the at least one measuring coil (21,21a,22) in response to movement due to the particle velocity (u) in the component (5, 5', 9, 10a, 10b, 10c, 15, 16, 17).

2. The arrangement according to claim 1, wherein the at least one measuring system (100) is arranged

   on the component (5, 5', 9, 10a, 10b, 10c, 15, 16, 17) parallel or angular to a central axis (X) of the component (5, 5', 9, 10a, 10b, 10c, 15, 16, 17);
   to surround at least partly the component (5, 5', 9, 10a, 10b, 10c, 15, 16, 17); or
   into at least one void (20) of the component (5, 5', 9, 10a, 10b, 10c, 15, 16, 17).

3. The arrangement according to claim 1 or claim 2, wherein

   the magnetization means (18, 28, 38,39) is arranged between the measuring coils (21, 22) or at least partly around the at least one measuring coil (21,21a,22); or
   one measuring coil (21,21a,22) is arranged between the magnetization means (18, 28,38,39).

4. The arrangement according to any of any one of the preceding claims, wherein the at least one measuring system (100) comprising at least one of the following:

   one measuring coil (21,22) and two magnetization means (18, 28,38,39), which are configured to be magnetized in different directions relative to each other;
   one measuring coil (21a), wherein the measuring coil (21a) is a two-part measuring coil (21a), and one or two magnetization means (18, 28, 38,39), wherein a winding direction (d1,d2) of the two-part measuring coil (21a) is configured to be changed in the middle of the two-part measuring coil (21a); and/or
   two measuring coils (21,22) and one magnetization means (18, 28, 38,39).

5. The arrangement according to any of any one of the preceding claims, wherein the at least one measuring system (100) is configured to measure an angular particle velocity (u) by arranging the at least one measuring system (100) angular to a central axis (X) of the component (5, 5', 9, 10a, 10b, 10c, 15, 16, 17).

6. The arrangement according to any one of the preceding claims, wherein the measurement of the particle velocity (u) is configured to be depended on a change direction of the magnetic flux ($\Phi$1, $\Phi$2), winding direction (c1,c2) of the at least one measuring coil (21,21a,22), and connection of poles (44,45) of the at least one measuring coil (21,21a,22).

7. The arrangement according to any one of the preceding claims, wherein the measuring arrangement (100) comprises a first measuring coil (21) and a second measuring coil (22), and wherein the measuring arrangement (100) is configured to measure the particle velocity (u) when

   the magnetic flux ($\Phi$1) of the first measuring coil (21) is growing and the magnetic flux ($\Phi$1) is against the winding direction (c1) of the first measuring coil (21) causing voltage e > 0; and
   the magnetic flux ($\Phi$2) of the second measuring coil (22) is decreasing and the magnetic flux ($\Phi$2) is in the same direction as the winding direction (c2) of the second measuring coil (22) causing voltage e > 0.

8. The arrangement according to claim 7, wherein a negative pole (45) of the second measuring coil (22) is connected to a positive pole (44) of the first measuring coil (21).

9. The arrangement according to any of claims 1 to 6, wherein the measuring arrangement (100) comprises a first measuring coil (21) and a second measuring coil (22), and wherein the measuring arrangement (100) is configured to measure the particle velocity (u) when

the magnetic flux ($\Phi$1) of the first measuring coil (21) is growing and the magnetic flux ($\Phi$1) is against the winding direction (c1) of the first measuring coil (21) causing voltage e > 0; and
the magnetic flux ($\Phi$2) of the second measuring coil (22) is decreasing and the magnetic flux ($\Phi$2) is against the winding direction (c2) of the second measuring coil (22) causing voltage e > 0.

10. The arrangement according to claim 9, wherein a positive pole (45) of the second measuring coil (22) is connected to a positive pole (44) of the first measuring coil (21).

11. The arrangement according to any one of the preceding claims, wherein at least two measuring coils (21,21a,22) are connected in series.

12. The arrangement according to any of any one of the preceding claims, wherein the arrangement is further configured to measure temperature of the at least one measuring coil (21,21a,22).

13. The arrangement according to any of any one of the preceding claims, wherein the component (5, 5', 9, 10a, 10b, 10c, 15, 16, 17) of the rock breaking system (14) is at least one of the following: a tool (9), a drill rod (10a, 10b, 10c), a drill bit (11), a component of an impact mechanism (5) such as a frame structure (5') of the impact mechanism (5), impact device (15), a drill shank (16), an attenuating device (17), an adapter and/or a coupling sleeve.

14. A method for measuring rock breaking dynamics with at least one measuring system (100) comprising at least one measuring coil (21,21a,22) and magnetization means (18, 28, 38,39), wherein the method comprising

subjecting (110) at least one component (5, 5', 9, 10a, 10b, 10c, 15, 16, 17) of a rock breaking system (14) to stress during rock breaking;
arranging (110) at least part of the component (5, 5', 9, 10a, 10b, 10c, 15, 16, 17) of the rock breaking system (14) into the state of magnetization at least during a measurement period; and
measuring (120) particle velocity (u) on the basis of change in a magnetic flux ($\Phi$1, $\Phi$2) through the at least one measuring coil (21,21a,22) in response to a movement due to the particle velocity (u) in the component (5, 5', 9, 10a, 10b, 10c, 15, 16, 17).

15. A measuring system (100) comprising

at least one measuring coil (21,21a,22); and
magnetization means (18, 28, 38,39) configured to arrange at least part of a component (5, 5', 9, 10a, 10b, 10c, 15, 16, 17) of a rock breaking system (14) into the state of magnetization at least during a measurement period; wherein
the measuring system (100) is configured to measure particle velocity (u) on the basis of change in a magnetic flux ($\Phi$1, $\Phi$2) through the at least one second measuring coil (21,21a,22) in response to a movement due to the particle velocity (u) in the component (5, 5', 9, 10a, 10b, 10c, 15, 16, 17).

FIG. 1

FIG. 2

FIG. 3A

FIG. 3B

FIG. 3C

FIG. 4A

FIG. 4B

FIG. 5A

FIG. 5B

FIG. 5C

FIG. 6A

FIG. 6B

FIG. 7A

FIG. 7B

FIG. 7C

FIG. 7D

FIG. 8A

FIG. 8B

FIG. 9

FIG. 10

FIG. 11

FIG. 12

FIG. 13

110
Subjecting the at least one component of a rock
breaking system to stress during rock breaking.

120
Arranging at least part of the component of the rock
breaking system into the state of magnetization at
least during a measurement period.

130
Measuring particle velocity on the basis of change in a
magnetic flux in response to a movement due to the
particle velocity in the component.

FIG. 14

Europäisches
Patentamt

European
Patent Office

Office européen
des brevets

# EUROPEAN SEARCH REPORT

Application Number

EP 22 17 3152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/037905 A1 (SANDVIK MINING & CONSTR OY [FI]; KESKINIVA MARKKU [FI] ET AL.) 8 April 2010 (2010-04-08) | 1,13-15 | INV. G01N1/08 G01N3/30 G01N3/317 |
| Y | * abstract; claims 7, 18; figure 1 * * paragraphs [0023] - [0027] * | 2-12 | G01N3/58 G01N27/72 |
| Y | CA 2 851 922 A1 (SANDVIK MINING & CONSTR OY [FI]) 15 November 2015 (2015-11-15) * the whole document * * abstract; figures 4-11 * * page 15, line 3 - page 20, line 1 * | 2-4,11 | |
| Y | EP 2 811 110 A1 (SANDVIK MINING & CONSTR OY [FI]) 10 December 2014 (2014-12-10) * the whole document * * abstract; figures 4-11 * * paragraphs [0055], [0061], [0062], [0073] - [0085] * | 2-4,11, 12 | |
| Y | WO 2013/167960 A1 (SANDVIK MINING & CONSTR OY [ZA]) 14 November 2013 (2013-11-14) * the whole document * * abstract; figures 1-5 * * page 23, line 21 - page 24, line 7 * | 2-4,11 | TECHNICAL FIELDS SEARCHED (IPC) G01N G01V E21B |
| Y | WO 2009/082767 A2 (SANDVIK MINING & CONSTR OY [ZA]; COSTHUIZEN OCKERT ET AL.) 2 July 2009 (2009-07-02) * the whole document * * abstract; figures 1-5 * * paragraphs [0040] - [0047] * | 2-4,11 | |
| Y | EP 2 428 821 A2 (SCHLUMBERGER SERVICES PETROL [FR]; SCHLUMBERGER HOLDINGS [VG] ET AL.) 14 March 2012 (2012-03-14) * abstract; claim 14; figures 1A, 4A-6A, 7 * * paragraphs [0049], [0050], [0065], [0078], [0079] * | 5-10,12 | |

The present search report has been drawn up for all claims

| Place of search | Date of completion of the search | Examiner |
|---|---|---|
| The Hague | 4 October 2022 | Zarowna-Dabrowska, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 276 438 A1

## ANNEX TO THE EUROPEAN SEARCH REPORT
## ON EUROPEAN PATENT APPLICATION NO.

EP 22 17 3152

04-10-2022

| Patent document cited in search report | | | Publication date | Patent family member(s) | | | Publication date |
|---|---|---|---|---|---|---|---|
| WO 2010037905 | A1 | | 08-04-2010 | AU | 2009299713 | A1 | 08-04-2010 |
| | | | | CA | 2735772 | A1 | 08-04-2010 |
| | | | | CL | 2011000680 | A1 | 07-10-2011 |
| | | | | CN | 102164714 | A | 24-08-2011 |
| | | | | EP | 2328723 | A1 | 08-06-2011 |
| | | | | FI | 20085926 | A | 31-03-2010 |
| | | | | JP | 5399498 | B2 | 29-01-2014 |
| | | | | JP | 2012504197 | A | 16-02-2012 |
| | | | | WO | 2010037905 | A1 | 08-04-2010 |
| | | | | ZA | 201101642 | B | 25-01-2012 |
| CA 2851922 | A1 | | 15-11-2015 | NONE | | | |
| EP 2811110 | A1 | | 10-12-2014 | AU | 2014202974 | A1 | 15-01-2015 |
| | | | | CN | 104236762 | A | 24-12-2014 |
| | | | | EP | 2811110 | A1 | 10-12-2014 |
| | | | | JP | 5767368 | B2 | 19-08-2015 |
| | | | | JP | 2014237217 | A | 18-12-2014 |
| WO 2013167960 | A1 | | 14-11-2013 | AU | 2013257764 | A1 | 13-11-2014 |
| | | | | CA | 2871330 | A1 | 14-11-2013 |
| | | | | CN | 104583768 | A | 29-04-2015 |
| | | | | EP | 2847582 | A1 | 18-03-2015 |
| | | | | JP | 5941218 | B2 | 29-06-2016 |
| | | | | JP | 2015516086 | A | 04-06-2015 |
| | | | | US | 2015123666 | A1 | 07-05-2015 |
| | | | | WO | 2013167960 | A1 | 14-11-2013 |
| | | | | ZA | 201407867 | B | 26-10-2016 |
| WO 2009082767 | A2 | | 02-07-2009 | AU | 2008340168 | A1 | 02-07-2009 |
| | | | | CA | 2698352 | A1 | 02-07-2009 |
| | | | | CN | 101861509 | A | 13-10-2010 |
| | | | | EA | 201070255 | A1 | 29-10-2010 |
| | | | | EP | 2188585 | A2 | 26-05-2010 |
| | | | | JP | 5352590 | B2 | 27-11-2013 |
| | | | | JP | 2010539429 | A | 16-12-2010 |
| | | | | KR | 20100065370 | A | 16-06-2010 |
| | | | | US | 2010300317 | A1 | 02-12-2010 |
| | | | | WO | 2009082767 | A2 | 02-07-2009 |
| | | | | ZA | 201001496 | B | 24-11-2010 |
| EP 2428821 | A2 | | 14-03-2012 | CA | 2752002 | A1 | 14-03-2012 |
| | | | | EP | 2428821 | A2 | 14-03-2012 |
| | | | | US | 2012063263 | A1 | 15-03-2012 |

EPO FORM P0459

For more details about this annex : see Official Journal of the European Patent Office, No. 12/82